# EUROPEAN PATENT APPLICATION

(11) **EP 2 735 380 A1**
(43) Date of publication of application: **28.05.2014**
(21) Application number: 13194158.5
(22) Date of filing: 22.11.2013
(51) Int. Cl.: B06B 1/06, G01S 1/72, G10K 9/122

(54) **A transducer for a locator beacon and an underwater locator beacon**

(30) Priority: 23.11.2012 GB 201221142
(71) Applicant: Thales Holdings UK Plc, Addlestone, Surrey KT15 2NX (GB)
(72) Inventor: Walden, John, Weybridge, Surrey KT15 2NX (GB); Steller, Tim, Weybridge, Surrey KT15 2NX (GB)
(74) Representative: Fraser, Karen

(57) **Abstract**

The invention provides a transducer for use in a locator beacon for locating objects underwater, and a locator beacon incorporating such a transducer. The transducer comprises a housing that encloses a cavity. The housing has one or more apertures for allowing fluid to flow into and out of the cavity when the locator beacon is placed underwater. The transducer also comprises a piezo-electric element attached to or forming part of said housing, said element capable of movement when an electrical signal is applied to it, such that water is moved in and out of the cavity via the apertures thereby generating sound energy at a frequency that is the same as the frequency of the electrical signal applied.

## Description

### Field of the Invention

The invention relates to a transducer for a locator beacon, and a locator beacon for locating objects underwater.

### Background of the Invention

Objects that could be lost underwater such as aircraft, ships, data loggers, sonar equipment and underwater oil and gas installations often include locator beacons that allow them to be detected and found using sonar or some other suitable equipment. These beacons radiate sound pulses when in the water which allow them to be detected. The detecting or sensing equipment are in most cases acoustic detectors, ultrasonic sensors/detectors or the like.

Sonar (an acronym for SOund Navigation And Ranging) is a technique that uses sound propagation to navigate, communicate with or detect objects on or under the surface of the water, such as other vessels. Two types of technology share the name "sonar": passive sonar is essentially listening for the sound made by objects; active sonar is emitting pulses of sounds and listening for echoes. Sonar may be used as a means of acoustic location and of measurement of the echo characteristics of "objects" in the water. The term sonar is also used for the equipment used to generate and receive the sound.

An underwater locator beacon (ULB) or underwater acoustic beacon is typically detected using passive sonar equipment, as it generates sound waves. ULBs are used extensively in the aviation industry and are usually fitted to aviation flight recorders such as the cockpit voice recorder and flight data recorder (commonly referred to as the "black box"). ULBs are also sometimes required to be attached directly to an aircraft fuselage. However, ULBs are not limited to be used for aircrafts alone and are suitable for attached to any object such as ships, equipment etc. that could get lost underwater. When triggered by water immersion, a typical ULB emits an ultrasonic pulse of 37.5 kHz ten times per second. Such locator beacons are normally battery operated, with a battery life of about 30 days underwater. Passive sonar equipment may be used to detect these emitted pulses and locate the beacon, and therefore the object to which it is attached under water. It is important to maximise the battery life as this extends the time during which the object may be found under water by the detection of its acoustic pulses. It is also important to minimise the size and the weight of the beacon to reduce its impact on the carrying object. Most ULBs make use an ultrasonic transducer, which is a device that converts electrical energy into ultrasound, or sound waves above the normal range of human hearing.

The piezoelectric effect refers to the voltage produced when a mechanical stress is applied to it to an element. Conversely when a voltage is applied across certain surfaces of a solid that exhibits the piezoelectric effect, the solid undergoes a mechanical distortion. This property is incorporated in making piezoelectric transducers using elements that exhibit the piezoelectric effect.

Existing beacons for commercial aircrafts radiate 37.5 kHz pulses. At this frequency there is a significant absorption of the sound by the water path (range or distance in the water) between the beacon and the receiver/detector. This absorption loss is typically between 4.3 and 8 dB per km at 37.5 kHz and is dependant on water pressure, and thus the depth at which the beacon is located. Existing beacons radiate relatively low power acoustic signals. The receiving sonar will receive background acoustic noise from the ocean, as well as the signals from the beacon, and to make a detection of the beacon it will need to identify the beacon signals from the background noise. If there is a large absorption loss the beacon signals will be very weak and difficult to identify in the background noise. Therefore, for a beacon located at deep ocean depth of about 1000 fathoms or 1800 m or more, it may not be possible to detect the beacon at the surface without a complex receiving sonar. Detection of such beacons is difficult at large ocean depths and therefore they are ineffective in the deep ocean. They however have the advantage of being small and therefore having a lighter weight, which is desirable.

An example of a ULB operating at this frequency of 37.5 kHz is a locator beacon incorporating a flexural disc transducer designed for use as an underwater sound projector. Different configurations of multiple bi-laminar discs can be employed for such transducers. Another example is a locator beacon having a transducer incorporating a ceramic ring that expands when excited electrically. This pushes against the transducer case and radiates into the water via the case. In one example, a locator beacon including a ceramic ring transducer of this type is a cylinder of about 1.30 inches (3.30 cm) diameter x 3.92 inches (9.95 cm) long and a weight of 6.7 ounces (190 grams).I

In view of the high operating frequency of the flexural disc and the ceramic ring transducers, significant absorption losses occur which makes it difficult to detect at deep ocean depths of about 1000 fathoms.

If a lower frequency is used, the absorption of the sound by the water may be reduced. For instance, at a frequency of 5kHz it is about 0.2dB per km or less. Therefore, by reducing the frequency of the radiated pulses, the range/depth at which it may be detected is increased. A simple sonar receiver would therefore be able to detect the beacon at a range or depth that might require very complex sonar if the radiated pulses were at 37.5kHz. However, reducing the operation frequency typically requires an increase in the size of the ultrasonic or sonar transducer within, or it decreases its efficiency. Such transducers require a larger battery or will suffer from a much reduced battery life. The sound transmissions from such transducers may also become directional due to their large size, which is undesirable for detection purposes. Locator beacons operating in the 5kHz to 10kHz region can be built with conventional transducers. However, such beacons are large, inefficient, and expensive to build and are heavy. This makes it difficult to incorporate them in objects such as aircraft.

An example of a suitable transducer for such beacons is the free-flooded ring transducer. These are efficient transducers that provide reasonable power levels over wide range of frequencies and deep ocean capability and are virtually independent of depth. However the radiation pattern may be omni-directional only in a plane perpendicular to the axis of the ring, while the directivity in the other planes depends on the dimensions and shape of the transducer. Free flooded transducers can be manufactured in a wide range of ceramic rings and sizes. These transducers can operate in frequencies from 10kHz to over 60kHz. These are quite large and heavy structures that would not suit applications in aircrafts or other instances where size and weight restrictions apply. An example of a free-flooded ring is the Neptune Sonar Model T160 flooded ring. Typical device dimensions for such free-flooded rings are 235mm in diameter, 106mm in height and 11 kg in weight. This specific device may be configured to be a high power device. i.e. it can transmit upto 2000w of power.

There is also a need for an underwater locator beacon to produce omni-directional acoustic/sound signals. This is because the orientation of the beacon on the object lost underwater may not be known. If the beacon radiates all of its power in a single direction, then this power may not radiated towards the receiving or detecting equipment, thereby making its detection difficult.

Therefore, there is a need for an underwater locator beacon that allows for detection at greater ocean depths whilst having a small size and longer battery/operating life that produces omni-directional acoustic/sound signals.

### Summary of the Invention

In one aspect, the invention provides a transducer for use in a locator beacon, the transducer comprising:
a housing comprising a bounding wall defining a cavity, the bounding wall further defining at least one through - aperture providing a pathway for communication of fluid between the cavity and the exterior of the housing; and
a piezo-electric element operable under the application of an electrical signal to undergo piezo-electric deformation to cause consequent change to the volume of the cavity and thus to cause corresponding flow of fluid through the pathway.

In a further aspect, the invention relates to a locator beacon comprising:
a transducer as set out above; and
an electrical signal source configured to emit electrical signals at a frequency in the range of 5kHz to 10 kHz;
wherein the electrical source is arranged to apply said emitted electrical signals to the transducer causing the piezo-electric element in the transducer to expand and contract at said emitted frequency, such that when the locator beacon is placed under water, water is moved into and out of said cavity causing sound energy to be generated from the locator beacon at a frequency that is the same as the emitted signal frequency.

### Brief description of the Drawings

Figure 1 is a block diagram showing an embodiment of a transducer according to the present invention for use in a locator beacon.
Figure 2 is an exploded block diagram showing an underwater locater beacon incorporating a transducer according to the present invention.

### Detailed Description

The present invention provides a transducer for a locator beacon that comprises a Helmholtz resonator with piezoelectric material attached to it or embedded in it.
Helmholtz resonance is the phenomenon of fluid resonance in a cavity, such as when one blows across the top of an empty bottle. When fluid is forced into a cavity, the pressure inside the cavity increases. When the external force pushing the fluid into the cavity is removed, the higher-pressure fluid inside will flow out. The cavity will be left at a pressure slightly lower than the outside, causing fluid to be drawn back in. This process repeats with the magnitude of the pressure changes decreasing each time. A Helmholtz resonator or Helmholtz oscillator is a container of fluid (usually air) with an open hole (or neck or port). A volume of fluid in and near the open hole vibrates because of the 'springiness' of the fluid inside, i.e. when it is compressed, its pressure increases and it tends to expand back to its original volume.

The phenomenon of Helmholtz resonance typically finds application in internal combustion engines subwoofers, acoustics and some musical instruments such as guitars, violins, ocarina etc.

The present invention uses the principle of Helmholtz resonance in transducers for underwater locator beacons.

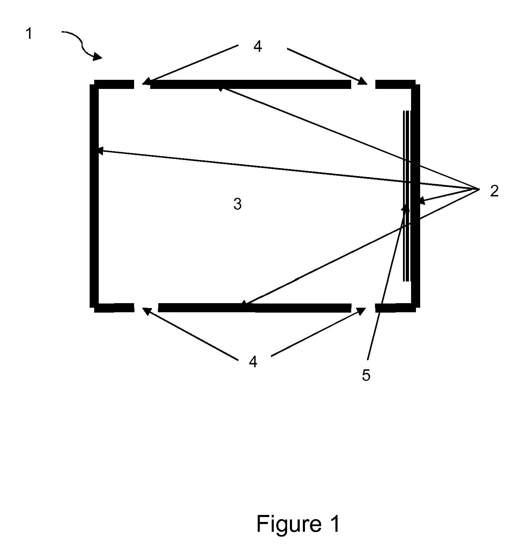

In one aspect the invention relates to a transducer 1 for an underwater locator beacon as shown in figure 1, comprising a housing 2 having a bounding wall that encloses a cavity 3. This cavity 3 is free-flooding and therefore becomes filled when the transducer 1 is immersed in water or any other fluid. This free - flooding nature is facilitated by one or more through- apertures 4 or flooding holes 4 provided in the bounding wall housing 2 for allowing fluid to flow into and out of the cavity when the locator beacon is immersed in fluid. The housing 2 and cavity 3 with the aperture(s) 4 forms a Helmholtz resonator. Such resonators are small in size compared to conventional transducers that are used in locator beacons. In one example, a beacon including a Helmholtz resonator may be a cylinder of 163mm in length and 50mm in diameter having a transducer (the Helmholtz resonator) that is approximately 25 mm of the total length.

A piezo-electric element 5 is attached to the housing or forms part of said housing of the transducer 1. This attachment can be obtained by using a suitable adhesive material to attach the element 5 to the bounding wall of the housing 2 i.e. the inner surface or the outer surface of the bounding wall. Other means of attachment are also possible. For instance, attachment can be made using any other fastener that will be suitable for underwater applications and will not restrict the element 5 from undergoing piezo-electric deformation or flexing, i.e. the expansion and contraction movement of the piezo-electric element 5. Alternatively, one portion of the bounding wall may be formed of a suitable piezo-electric material, which acts as the piezo-electric element 5.

This element 5 may be any piezo -electric material such as piezo-ceramic that exhibits piezo-electric effect, i.e. when a voltage is applied across the element, it undergoes a mechanical/physical distortion or deformation.

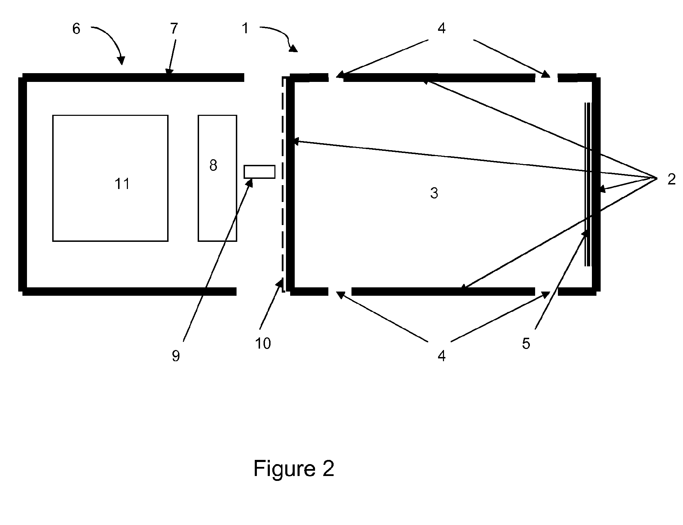

The invention also relates to a locator beacon as shown in figure 2 that comprises the transducer described above and an electrical source 6 that may include a battery (11) or any other source of electrical energy that is capable of operating underwater. Figure 2 shows a block diagram of the locator beacon incorporating the transducer 1 and the electrical source 6. Batteries for powering underwater beacons are known in the art and can be incorporated in the locator beacon of the present invention. The electrical source 6 is for providing electrical signals to the transducer and particularly the piezo-electric element 5 of the transducer. The source 6 is arranged to be electrically connected to transducer 1 so that electrical signals from the source can activate the piezo-electric element 5 causing it to undergo piezo-electric deformation, either directly or via a suitable conductor. The electrical connection can in one example be achieved by obtaining a piece of ceramic piezo-electric material and coating each face with an electrical conductor, typically silver or another conductor, such that the two opposite faces are not connected together (e.g. for a flat disc the top and bottom would be coated but not the sides). A wire can then be soldered to each face and connected to the power source or the electronics. Instead of soldering, the wires may also be attached with electrically conductive glue. In order to make it suitable for use in water, the piezo-electric element 5 can then be coated with an insulator, typically varnish or poly-urethane.

The electrical source 6 is preferably placed in close proximity to the housing, as this will reduce the overall size of the locator beacon. In one embodiment, the electrical source 6 is enclosed in a housing or case 7 that can be attached to the housing 2 of the transducer. In the embodiment shown in figure 2, the source is contained in a case 7 that can be removably attached to the transducer 1 for establishing mechanical as well as electrical connection. Mechanical connection is obtained by means of a thread and seal arrangement 10 as in the figure 2. Other means of connecting the source and transducer may also be incorporated, such as a clip or latch arrangement or by means of an adhesive substance. The source 6 in figure 1 is shown as a battery 11 and circuit board arrangement having an inductor 8 or a coil for storing electrical energy. Electrical connection to the transducer is obtained via a penetrator 9 for the transmission of electrical signal from the source 6 to the piezo-electric element 5 when the cavity 3 when filled with water.

The circuit board includes a collection of electronic components that detect if the beacon is in water and create the signals to drive the transducer. Typically these are done with timer devices to determine if it is time to produce a transmission and to produce the waveform during a transmit period. As an alternative, a microcontroller could be used. The waveform is then amplified and used to drive power transistors that drive the transducer via a matching device. Typically, a transducer is a high impedance very capacitive electrical load - this may not be efficiently driven by a transistor amplifier so a combined inductor and transformer may be used to cancel the capacitance of the load and step up the signal voltage to send to the transducer.

The penetrator 9 may be a threaded glass cylinder with a conductor going through the centre - the conductor being either a copper or steel rod, but could also be made from any other suitable conductive material. The penetrator is arranged in the locator beacon such that it can be fitted or screwed into an opening in the outer casing 7 of the source 6, or glued into place. This penetrator provides a waterproof connection from one side of the case 7 to the other that is insulated from the case 7 so that it can provide electrical connection to the piezoelectric element 5. Insulation is applied on side of the case exposed to the fluid and can be done by coating the outer surface with an insulating material. These signals may be transmitted directly to the piezo-electric element or may reach the element 5 via insulated wires inside the housing 2 or cavity 3 when filled with water.

Other mechanical and electrical connection techniques are also possible. In some embodiments it may not be necessary for the source 6 to be in close proximity to the transducer, and signals may be transmitted via suitable electrical conductors.

When the locator beacon is underwater, the electrical source is preferably configured to operate at low frequencies in the range of 5 kHz to 10 kHz. Therefore the electrical signals emitted by the source would be of low frequencies of 5 to 10 kHz. Other frequencies between 2 to 20 kHz are also possible, but the frequencies between 5 to 10 kHz are most preferred. The Helmholtz resonator can operate over a wider range of frequencies, however; the 5-10 kHz range is the preferred frequency range for long distance transmissions. This is because at lower frequencies (below 5 kHz) the acoustic noise in the sea increases (this is generally considered due to sound radiated from distant shipping) and at higher frequencies the attenuation in the sea (absorption loss) increases. If the frequency was reduced below 5 kHz the background noise would increase considerably. The optimum frequency is between 5 and 10 kHz, although the precise optimum value is dependent on sea state (which varies from day to day).

Electrical signals at a chosen transmission frequency in the range of 5 kHz to 10 kHz are applied to the piezo-electric element 5. This causes the element 5 to undergo piezo-electric deformation. Therefore the element 5 expands and contracts at this applied signal frequency. In another aspect, such expansion and contraction causes the bounding wall 2 of the cavity 3 to bend at the applied signal frequency such that the whole cavity expands and contracts at the applied signal frequency. When the beacon is immersed in the water, this free-flooding cavity 3 will be filled with water and becomes a flooded cavity 3. This movement of the piezo-electric element 5 or the movement of the element 5 and the cavity wall 2 causes the volume of the water in the cavity 3 to change at a frequency that is the same as the frequency of the emitted signal from the source or the signal that is applied to the element,. The change of volume is brought about by water moving in and out of the cavity 3 via the aperture(s) 4 in the housing 2. This movement of the water into and out of the cavity is also at the transmission frequency from the source 6. This movement causes sound energy to be generated also at the chosen transmission frequency (in the range 5kHz to 10 kHz) i.e. the sound energy is generated at said same signal frequency.

The location beacon according to the present invention incorporating a transducer as described above (Helmholtz resonator) is more efficient compared to conventional transducers. ULB's having small sized transducers such as flexural disc transducers only operate at frequencies around 37.5 kHz and are not effective at deep ocean depths due to the absorption losses. Furthermore, the structure of such transducers needs to be strong enough to withstand deep ocean pressure and this compromises the design of such ULB's. This frequency of operation of 5kHz to 10kHz of the locator beacons of the present invention is advantageous as the absorption loss is much less. This allows sound pulses generated by the beacon to be detected even if the beacon is located at deep ocean depths. The free-flooding nature of the cavity 3 of the transducer 1 makes it insensitive to operating depths and water pressure, as it is does not need to withstand external water pressure. This allows for longer detection ranges and better detection in the deep ocean.

Furthermore, as the transducer is a Helmholtz resonator, this allows significant reduction in size and weight of the beacon. For aircraft installations savings in size and weight is extremely beneficial. The dimensions of the Helmholtz resonator are significantly smaller than the wavelength of the sound waves that will be radiated at the frequency of 5-10 kHz and this allows an omni-directional radiation of sound waves which can be more easily detected by sensors or detection equipment. The reason for this being that the orientation of the beacon after a crash will not be known, and therefore if a beacon radiates all of its power in one direction, this may be pointing into the sea bottom and will not be detected easily. If the beacon radiates omnidirectionally at least some power will always be radiated towards the receiving sonar. The small size also allows for longer battery life thereby increasing the time that it operates underwater. The small transducer size means that for a given total size, a larger battery can be used and hence a longer life. Its high efficiency means low electrical power is needed for a given acoustic power out - hence low power consumption and long battery life.

## Claims

1. A transducer for use in a locator beacon, the transducer comprising:
a housing comprising a bounding wall defining a cavity, the bounding wall further defining at least one through - aperture providing a pathway for communication of fluid between the cavity and the exterior of the housing; and;
a piezo-electric element operable under the application of an electrical signal to undergo piezo-electric deformation to cause consequent change to the volume of the cavity and thus to cause corresponding flow of fluid through the pathway.

2. The transducer as claimed in any one of claim 1 wherein the volume of fluid in the cavity changes according to the frequency of the applied electrical signal.

3. A transducer as claimed in claim 1 or 2 wherein, when said transducer is immersed in a fluid, said fluid is moved in and out of the cavity through the pathway thereby generating sound energy at a frequency that is the same as the frequency of the applied electrical signal.

4. A transducer as claimed in any of claims 1 to 3 wherein said fluid is water.

5. The transducer as claimed in any one of claims 1 to 4 wherein the applied electrical signal has a frequency in the range of 5kHz to 10 kHz.

6. The transducer as claimed in any of claims 1 to 5 wherein said piezo-electric element is attached to or forms part of said bounding wall of the housing.

7. The transducer as claimed in claim 6 wherein said piezo-electric element is attached to an inner surface of the bounding wall by a fastener.

8. The transducer as claimed in claim 7 wherein said fastener is an adhesive.

9. The transducer as claimed in any one of claims 1 to 8 wherein said transducer is a Helmholtz resonator.

10. A locator beacon comprising:
a transducer according to any one of the preceding claims; and
an electrical signal source configured to emit electrical signals at a frequency in the range of 5kHz to 10 kHz;
wherein the electrical source is arranged to apply said emitted electrical signals to the transducer causing the piezo-electric element in the transducer to expand and contract at said emitted frequency, such that when the locator beacon is placed under water, water is moved into and out of said cavity causing sound energy to be generated from the locator beacon at a frequency that is the same as the emitted signal frequency.

11. The locator beacon as claimed in claim 10 wherein said electrical source comprises an inductor that is electrically connected to the transducer.

12. The locator beacon as claimed in claim 10 wherein said electrical source comprises is a battery that is electrically connected to the transducer.

13. The locator beacon as claimed in claim 10 wherein said electrical source is removably connected to the transducer.

14. The locator beacon as claimed in claim 13 wherein said electrical source is connected to the transducer using a thread and seal arrangement.
